# EUROPEAN PATENT APPLICATION

(11) **EP 1 912 379 A1**
(43) Date of publication of application: **16.04.2008**
(21) Application number: 06121997.8
(22) Date of filing: 09.10.2006
(51) Int. Cl.: H04L 12/24, H04L 12/26

(54) **A method and apparatus of specifying a monitoring criterion for a parameter of an object in a network management system**

(71) Applicant: Hewlett-Packard Development Company, L.P., Houston, TX 77070 (US)
(72) Inventor: Gutjahr, Bernd, 71034 DE, Boeblingen (DE)
(74) Representative: Franks, Adam Peter

(57) **Abstract**

The invention relates to a method of specifying a monitoring criterion for a parameter of an object in an operational management system. The method in accordance with the invention comprises the step of assigning first information to the parameter, wherein the first information is associated with a first priority. In a further step, the first information is employed as monitoring criterion for the parameter if no further information associated with a priority higher than the first priority is assigned to the parameter.

## Description

### Background and related art

Operational management systems are employed to configure, to control, to manage, and to monitor computer systems, computer and telecommunications networks, and computer applications. For example, operational management systems might be used for managing databases, banking applications, manufacturing applications, E-Mail services, and printing services.

Operational management is also applied to large scale networks such as computer networks and telecommunication networks and refers to the maintenance and administration of such networks. Operational management is in this case also denoted as network management. Network management can be understood as the execution of a set of functions required for controlling, planning, allocating, deploying, coordinating, and monitoring the resources of a network. This includes performing functions such as initial network planning, frequency allocation, predetermined traffic routing to support load balancing, cryptographic key distribution authorization, configuration management, forward management, security management, performance management, bandwidth management, and accounting management. In order to carry out network management on a computer network or a telecommunications network, a network management system is typically employed.

A network management system comprises so called network management software, which is executed by a computer in the network and which provides a human machine interface. An administrator is able to interact with the network management system via the human machine interface. Components of the network are represented in the network management system as objects. The components might be hardware as well as software components. One or more parameters can be associated with each object in the network management system. The parameters specify how the object is to be monitored by the network management system. For example, an object might relate to a router of the network. A parameter of this object might then relate to the maximal allowed data rate flowing through the router.

A large number of protocols exist to support network device management. Common protocols include the simple network management protocol (SNMP), the common management interface protocol (CMIP), java management extensions-JMX, and many more. Data for network management is collected through several mechanisms, for example agents installed on the components of the network. An agent which is a software component, and which is part of the network management system might for example be installed on the above mentioned router. The parameter of the object that represents the router in the network management system specifies as mentioned above the maximal allowed data rate through the router. The agent gets knowledge of the maximal allowed data rate and monitors the dataflow through the router and sends, for example, by use of one of the above mentioned protocols, an alarm message to the network management system in case the maximum allowed data rate is exceeded by the router. The network management software of the network management system further alerts then the system administrator for example via the human machine interface.

The parameters which specify how the objects have to be managed by the network management system must however be specified by the system administrator. For example, the above mentioned maximum allowed data rate through the router has to be specified by a value, e.g., 100 megabit per second. In a large scale network there might however be many routers, e.g. 10,000. Providing each data for each router would be very tedious for the administrator and maybe even not feasible.

More generally speaking, there can be a large variety and a large number of objects in the network management system that relate to components of the network. Each object is managed by use of one or more parameters. Specifying a value or more generally an information such as an encryption key for the parameter, is however not feasible for a system administrator because of the possible large amount of objects.

Similarly, parameters specify how objects defined in an operational management system are to be monitored. An operational management system might for example be used to monitor an E-Mail service provided by an internet portal. A user account of the internet portal might be then associated with an object of the operational management system. A parameter can then specify that a user account is deleted when the account has not been accessed for more than six months. The amount of user accounts and hence the amount of objects in the operation management system might however be very large and an administrator might therefore not be able to specify the parameters that are associated with the objects individually.

There is therefore a need for an improved method of specifying a monitoring criterion for a parameter of an object in an operational management system, and a need for an improved operational management system.

### Summary of the invention

In accordance with an embodiment of the invention, there is provided a method of specifying a monitoring criterion for a parameter of an object in an operational management system. The method in accordance with the invention comprises the step of assigning first information to the parameter, wherein the first information is associated with a first priority. In a further step, the first information is employed as monitoring criterion for the parameter, if no further information being associated with a priority higher than the first priority is assigned to the parameter.

According to the embodiment of the invention, first information is therefore assigned by the operational management system to the parameter of the object. The first information has a first priority. Only if no further information with a higher priority is assigned to the parameter, the first information is used as a monitoring criterion for the parameter. The first information can therefore relate to a maximum allowed data rate for the case when the object relates to a router in the network that is managed by the operational management system. The first information can also relate to an authorization key for the case when the object relates to a computer system or a database application. In another example, the first information can relate to a specific response time threshold when the object relates to a web server. The first information relates to the object-type. Thus the administrator must only once specify first information for each parameter associated with an object of a specific object type. When a new object is created in the operational management system, the object type is identified and the corresponding first information is assigned to the parameters provided by the object. This provides the advantage that the administrator is able to control and manage even large scale networks without loosing the overview.

In accordance with an embodiment of the invention, the method further comprises the step of providing a first group, wherein the first group specifies second information associated with a second priority, and wherein the second priority is larger than the first priority. In a further step the object is assigned to the first group and the second information is assigned to the parameter. Furthermore, the second information is employed as monitoring criterion for the parameter if no further information having a higher priority than the second priority is assigned to the parameter. The usage of priorities assigned to the information provides the advantage that an object can be a member of the first group which provides second information for the parameter without a conflict with respect to which information is employed as monitoring criterion.

According to the embodiment of the invention, the object can be assigned to a first group. The first group can for example relate to the most important routers in a network, which are the routers that handle most of the traffic flow through the network. If the above mentioned object relates to a router in the network the router can be assigned to this first group. The first group might then specify second information for the parameter, e.g., a second value for the maximum allowed data rate through the router. The second information has a second priority which is larger than the first priority. Hence, the second information is then used instead of the first information as monitoring criterion for the parameter.

In accordance with an embodiment of the invention, a second group is provided, wherein the second group specifies third information associated with a third priority, and wherein the third priority is larger than the first priority. The object is further assigned to the second group and third information is assigned to the parameter. In a further step of the method in accordance with the invention, the third information is employed as monitoring criterion for the parameter if no further information having a priority higher than the third priority is assigned to the parameter.

The object can therefore be a member of the first group and of the second group. The first group specifies second information for the parameter and the second group specifies third information for the parameter. When the third priority is higher than the second priority, then the third information is used as monitoring criterion for the parameter if no further information having a priority higher than the third priority is assigned to the parameter. Otherwise the second information is used as monitoring criterion when no further information with a still higher priority is assigned to the parameter.

In accordance with an embodiment of the invention, the method further comprises the step of selecting randomly an information from two or more information if (a) the two or more information are associated with identical priorities and (b) if the two or more information are assigned to the same parameter and (c) if no other information with a higher priority is assigned to the parameter. In case there is a conflict, for example when the above mentioned second and third priorities are identical, one of the second or third information is selected randomly and used as a monitoring criterion.

In accordance with an embodiment of the invention, the method further comprises the step of informing an administrator of the operational management system if two information assigned to a parameter have identical priorities and if there is no further information assigned to the parameter which is associated with a still higher priority. In case there is a conflict as described above, the system administrator is informed so that she/he is able to react accordingly.

In accordance with an embodiment of the invention, a third group is provided, wherein the third group specifies fourth information associated with a fourth priority, and wherein the fourth priority is larger than the first priority. The first group comprising the object is assigned to the third group. In a further step of the method in accordance with an embodiment of the invention, the fourth information is assigned to the parameter of the object. Furthermore the fourth information is employed as monitoring criterion for the parameter if no further information having a priority higher than the fourth priority is assigned to the parameter. Groups can therefore be grouped into other groups which provide information for the parameter. As a priority is assigned to each information there is no conflict with respect to which information is taken as monitoring criterion.

In accordance with an embodiment of the invention, an administrator is enabled to specify individually fifth information for the parameter. A fifth priority is assigned to the fifth information, wherein the fifth priority corresponds to the highest priority. The fifth information is then used as monitoring criterion for the parameter.

Hence, the administrator of the operational management system is able to configure individually an object managed by the operational management system. More particularly the administrator is able to specify each parameter of the object individually. This provides the advantage that the administrator is able to interfere into the monitoring process by setting a monitoring criterion for the parameter. The fifth priority is assigned to the fifth information which is the highest priority defined in the operational management system. Hence, once the administrator has individually specified the fifth information for the parameter, this fifth information is used as a monitoring criterion for the parameter.

In accordance with an embodiment of the invention, the method in accordance with the invention further comprises the step of enabling an administrator to provide object type specific information for each object type provided by the operational management system, wherein the first information corresponds to the object type specific information provided by the administrator for the object type of the object. In a further step the first priority is assigned to the object type specific information. Furthermore, the administrator is enabled to provide the fifth information for the parameter, whereby the fifth priority is assigned to the fifth information. In a further step of the method in accordance with the invention, the administrator is enabled to provide the second, third and fourth information and to specify the second, third and fourth priorities.

The first information therefore corresponds to object type specific information which is assigned to the corresponding parameter of all objects that are of the same type. The administrator is furthermore able to specify the second, third and fourth information and the corresponding second, third and fourth priorities. The second, third or fourth information are then assigned to the parameter once the object becomes a member of the first, second or third group, respectively. Hence, the administrator must only define object type specific or group specific information for the parameter. When the object is created, the first information is automatically assigned by the operational management system to the object. If the object becomes a member of a group, which specifies information for a parameter of the object, the information is furthermore assigned to the parameter. For the case when several information are assigned to the parameter the information with the highest priority is used as a monitoring criterion for the parameter. Thus each parameter of an object can be specified via multiple groups and by an object type specific information. The information which is then used as a monitoring criterion is the information which has the highest priority. The method in accordance with an embodiment is therefore particularly advantageous as objects managed by the operational management system can be placed into multiple groups which might specify a parameter of the object that is managed by the operational management system. Each group can therefore contribute information or values referring to the parameter of the object automatically and the user can control which group take precedence over others via the priorities the administrator has assigned through the various groups. Furthermore the information and/or the priority specified by a group can be changed by the administrator which is then automatically updated in the specifications for the parameters. Hence the administrator can change group configurations and/or group memberships of an object without breaking precedence rules and making undesired brute force changes.

In other aspects, the invention relates to a computer program product and to an operational management system.

In accordance with an embodiment of the invention, the operational management system is a network management system.

### Brief description of the drawings

In the following preferred embodiments of the invention will be described in greater detail by way of example only making reference to the drawings in which:
- Figure 1: shows a block diagram of a network comprising a network management system,
- Figure 2: depicts a flow diagram which illustrates basic steps performed by a method in accordance with the invention,
- Figure 3: shows a server system managed by an operational management system, and
- Figure 4: depicts a flow diagram which illustrates basic steps performed by a method in accordance with the invention.

### Detailed Description

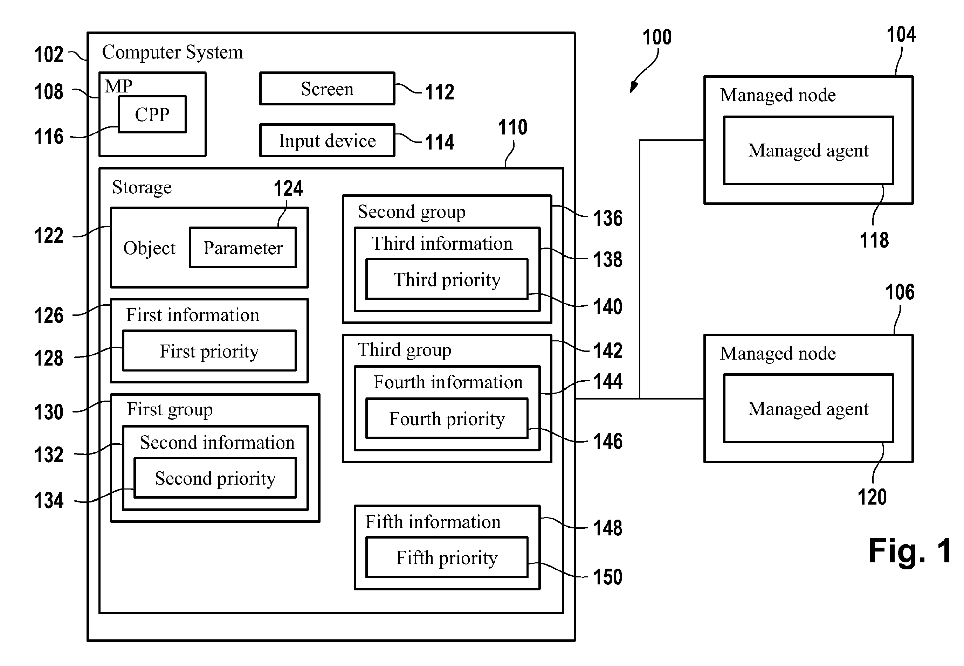

Fig. 1 shows a block diagram of a network 100. The network 100 comprises a computer system 102, a managed node 104, and a managed node 106. The managed nodes 104 and 106 might also be computer systems or other network infrastructure appliances such as hubs, switches, or routers.

The computer system 102 comprises a microprocessor 108, a storage device 110, a screen 112, and an input device 114. The microprocessor 108 executes a computer program product 116 which is stored permanently on the storage device 110 and loaded into the microprocessor 108, e.g., after the computer system 102 has been started up.

Each managed node 104 and 106 has a managed agent 118 and 120, respectively. The managed agents 118 and 120 are running as background software on the managed nodes 104 and 106, respectively.

The computer program product 116 and the managed agents 118 and 120 are components of an operational management system which is also referred to as network management system as the managed system is a network. The network management system is used to monitor and to manage the network 100. Each software component and each hardware component of the network could in principle be monitored by the network management system 100. For this, the network management system employs objects which are maintained by the computer program product 116, whereby an object represents a hardware or software component of the network 100 in the network management system.

An object 122 can for example be associated with the managed node 104. The object 122 is in principle a collection of data that relates to the managed node 104 and that is stored on the storage device 110 and maintained by the computer program product 116. The object 122 comprises a parameter 124 which refers to the managed node 104 and which is relevant for managing the managed node 104.

The parameter 124 specifies how the object 122 is to be monitored by the network management system.

In operation, first information 126 is assigned by the computer program product 116 to the parameter 124. The first information 126 has a first priority 128. The first information 126 provides, e.g., a value for the parameter 124 which is used as a monitoring criterion for the parameter 124 if no further information is assigned to the parameter 124 which has a priority that is larger than the first priority.

As an example, the managed node 104 could be a router. The object 122 refers then to the router and the parameter 124 could specify that the data rate of the dataflow through the router is to be monitored by the network management system. The first information specifies then, e.g., that the maximal allowed data rate through the router is 10 megabits per second.

The first information 126 is an object type specific information. That is, the first information 126 is assigned to corresponding parameters of all objects of the same type. According to the example given above, all routers of the network 100 are thus set to have a maximal allowed data rate of 10 megabits per second. The usage of first information assigned to corresponding parameters of all objects of the same type provides the advantage that an administrator must only once specify the first information 126 per parameter and per object type. The first information 126 is then automatically assigned to the corresponding parameters. Hence, independent of the amount of objects supervised by the administrator, the first information must only be specified once per parameter. The administrator is therefore able to manage even large networks without the risk of losing the overview of the network.

The object 122 can further be assigned to a first group 130, either by the administrator or automatically by computer program 116. The first group 130 further specifies a second information 132 which is associated with a second priority 134. The second information 132 is then assigned to the parameter 124. As the second priority 134 is larger than the first priority 128, the second information 132 is used as a monitoring criterion for the parameter 124 if no further information with a higher priority is assigned to the parameter 124.

In view of the example given above, the object 122 which relates to the router can be grouped into a group called, e.g., 'most important routers of the network' which provides second information 132 that specifies the maximal allowed data rate to 5 megabits per second. The previously specified maximal allowed data rate of 10 megabits per second is not taken into account anymore as monitoring criterion as the priority of the second information 132 is higher than the priority of the first information 126.

The object 122 can be further assigned to a second group 136. The second group 136 further specifies third information 138 for the parameter 124, whereby the third information 138 is associated with a third priority 140. The third information 138 is used by the network management system as monitoring criterion for the parameter 124 if no further information having a priority higher than the third priority 140 is assigned to the parameter 124.

The first group 130 can further be assigned to the third group 142. The third group 142 further specifies fourth information 144 associated with a fourth priority 146, whereby the fourth priority 146 is larger than the first priority 128. As the object 122 has been assigned to the first group 130 as described previously, the fourth information 144 is assigned to the parameter 124 and the fourth information 144 is employed by the network management system as a monitoring criterion for the parameter if no further information having a priority higher than the fourth priority 146 is assigned to the parameter.

An object, such as object 122, can therefore be assigned to a plurality of groups, such as the object 122 has been assigned to the first group 130 and to the second group 136. Both groups specify information for the parameter 124. In order to resolve any conflicts that might arise from the multiple specifications provided for the parameter 124, each information is associated with a priority. That is the second information 132 is associated with the second priority 134 and the third information 138 is associated with the third priority 140. Depending on which of the two priorities is higher, the second information 132 or the third information 140 is used as a monitoring criterion.

A group can further be a member of another group, such as the first group 130 is a member of the third group 142. Both groups provide information for the parameter 124, but only the information which is associated with the higher priority is taken into account as monitoring criterion for the parameter. The system administrator might further take the first group 130 out of the third group 142. The fourth information 144 is then not relevant anymore for the parameter 124 and is therefore not anymore taken into account if the fourth priority 146 was the highest priority assigned. The method in accordance with the invention is particularly advantageous as it allows to group groups into other groups without breaking precedence rules and the groups can be ungrouped without destroying settings made to the parameters.

The administrator is further enabled to specify individually fifth information 148 for the parameter 124. The computer program product 116 is adapted to visualize the object 122 with the parameter 124 on a graphical user interface (not shown in fig. 1) that is visualized to the user via the screen 112. The object 122 can for example be represented by a window which provides a list of all parameters that are defined for the object. The parameter 124 can then be selected from the list of parameters so that the information such as the first information 126, the second information 132, ..., becomes visible to the administrator and so that the administrator is immediately able to identify which information is specified for the parameter 124 of the object 122. The administrator can further enter the fifth information 148 via the input device 114. The fifth information 148 is then stored on the storage device 110 and a fifth priority 150 is assigned to the fifth information, whereby the fifth priority 150 corresponds to the highest priority. If the fifth information 148 is assigned to the parameter 124, then the fifth information 148 is used as a monitoring criterion for the parameter as the fifth priority 150 is the highest priority.

The administrator can further provide object type specific information for each object type provided by the network management system. For example a list of object types provided by the network management system is visualized to the administrator on the graphical user interface which is depicted on the screen 112. The administrator can click on each object type so that all parameters that are assigned to the object type become visible for the administrator. The administrator can then enter via the input device 114 for each of the parameters object type specific information. The first information 126 corresponds thereby to the object type specific information provided by the administrator for the object type of the object 122. The object type specific information provided by the administrator is stored on the storage device 110. The first priority 128 which is the lowest priority specified in the network management system is then assigned to the object type specific information by the computer program product 116. Furthermore, the administrator is enabled to provide the second, third and fourth information 132, 138, and 144 as well as the second, third and fourth priorities 134, 140, and 146, respectively so that the second, third and fourth priorities are higher than the first priorities and lower than the fifth priority. The second, third and fourth information are then stored along with the second, third and fourth priorities on the storage device 110, so that the first, second, third, fourth, and fifth information as well as the corresponding priorities are available to the computer program product 116.

The object 122 is accessible for the managed agent 118. The specifications of the parameter 124 are therefore known to the managed agent 118. The managed agent 118 can therefore monitor the managed node 104 according to the specifications made to the parameter 124.

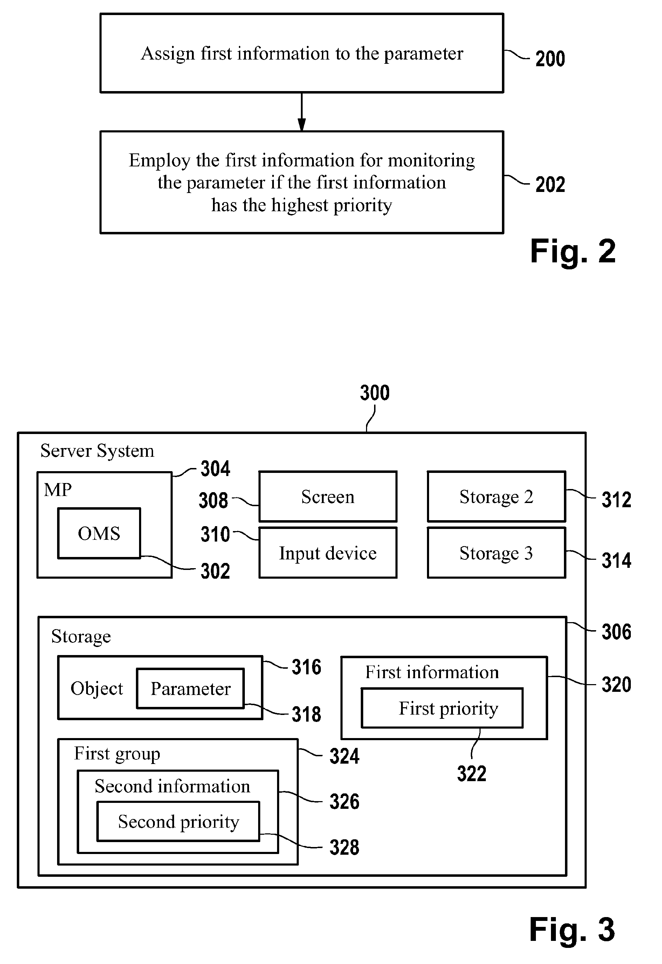

Fig. 2 shows a flow diagram illustrating basic steps performed by a method in accordance with an embodiment of the invention. In step 200 first information is assigned to a parameter, wherein the parameter relates to an object in an operational management system, and wherein the first information is associated with a first priority. In step 202, the first information is employed as a monitoring criterion for the parameter of the object if no further information associated with a higher priority than the first priority is assigned to the parameter.

Fig. 3 shows a server system 300 managed by an operational management system (OMS) 302. The server system 300 comprises a microprocessor 304, a first storage 306, a screen 308, an input device 310, a second storage 312 and a third storage 314. The microprocessor 304 executes the operational management system 302 which is a computer program that is stored on the storage 306 and loaded into the microprocessor 304, e.g., at the start-up of the server system 300. The server system 300 represents a database system, whereby data is stored on the second and third storage devices 312 and 314.

The operational management system 302 is used to monitor the second and third storage devices 312 and 314. An object 316 defined in the OMS 302 can relate to the second storage 312. The object 316 is a collection of data that relates to the second storage device 312. The object 316 is stored on the storage 306 so that it can be accessed by the OMS 302. The object 316 comprises a parameter 318 which is relevant for managing and monitoring the storage 312. The parameter 318 can for example relate to the filling level of the storage 312.

In operation, first information 320 is assigned by the OMS 302 to the parameter 318 of the object 316. The first information 320 might for example specify that when the second storage device 312 reaches a filling level of 90 %, an alert message is displayed via the screen 308 to an administrator of the server system 300. The first information 320 is further associated with a first priority 322. The first information 320 is an object type specific information which is also assigned to the corresponding parameter of the object which monitors the third storage device 314.

The object 316 can further be assigned to a first group 324. The first group 324 can for example relate to the 'important storage devices'. The first group 324 specifies second information 326 for the parameter 318. The second information 326 is associated with a second priority 328 which is higher than the first priority 322. The second information 326 might for example specify that when the second storage device 312 reaches a filling level of 75 %, an alert message is displayed via the screen 308 to an administrator of the server system 300. As the second priority 328 is higher than the first priority 322, the second information 326 is employed by the OMS 302 as a monitoring criterion.

The first information 320, the second information 326 as well as the first and second priorities 322 and 328 have been provided before by the administrator. They have for example been entered via the input device 310 into a human machine interface of the OMS 304 which has been displayed on the screen 308 to the administrator. The first information 320, the second information 326 as well as the first and second priorities 322 and 328 are then stored on the storage 306 so that they are available for the OMS 302 when it monitors the second storage 312.

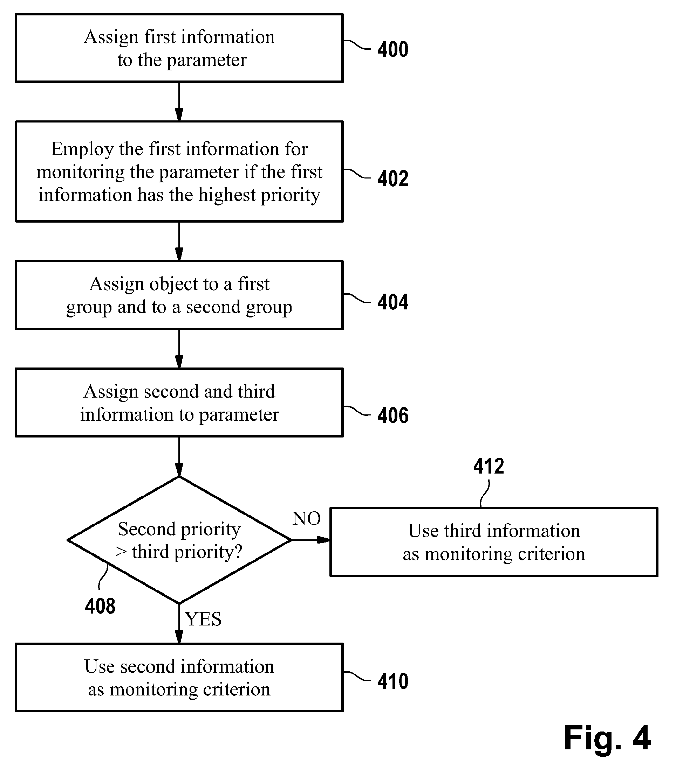

Fig. 4 depicts a flow diagram which illustrates basic steps performed by a method in accordance with the invention. In step 400, first information associated with a first priority is assigned to a parameter of an object in an operational management system. In step 402, the first information is employed as a monitoring criterion for the parameter if the first priority is the highest priority. In step 404, the object is assigned by the operational management system or manually by an administrator to a first group and to a second group. The first group specifies second information for the parameter and the second group specifies third information for the parameter, whereby the second information is associated with a second priority and whereby the third information is associated with a third priority, whereby the second and third priorities are larger than the first priority. Both, the second and third information are assigned to the parameter in step 406. In order to use one of the parameters as a monitoring criterion, the operational management system determines in step 408, if the second priority is higher than the third priority. If this is the case, the method in accordance with the invention proceeds with step 410 in which the second information is used as a monitoring criterion for the parameter. If in step 408 the second priority has been determined to be lower than the third priority, the method in accordance with the invention proceeds with step 412 in which the third information is used as a monitoring criterion for the parameter.

### List of Reference Numerals

- 100: Network
- 102: Computer system
- 104: Managed node
- 106: Managed node
- 108: Microprocessor
- 110: Storage device
- 112: Screen
- 114: Input device
- 116: Computer program product
- 118: Managed agent
- 120: Managed agent
- 122: Object
- 124: Parameter
- 126: First information
- 128: First priority
- 130: First group
- 132: Second information
- 134: Second priority
- 136: Second group
- 138: Third information
- 140: Third priority
- 142: Third group
- 144: Fourth information
- 146: Fourth priority
- 148: Fifth information
- 150: Fifth priority
- 300: Server system
- 302: Operational management system
- 304: Microprocessor
- 306: Storage device
- 308: Screen
- 310: Input device
- 312: Storage device
- 314: Storage device
- 316: Object
- 318: Parameter
- 320: First information
- 322: First priority
- 324: First group
- 326: Second information
- 328: Second priority

## Claims

1. A method of specifying a monitoring criterion for a parameter (124) of an object (122) in an operational management system, the method comprising:
- assigning first information (126) to the parameter, the first information being associated with a first priority (128);
- employing the first information as monitoring criterion for the parameter if no further information associated with a priority higher than the first priority is assigned to the parameter.

2. The method of claim 1, said method further comprising:
- providing a first group (130), the first group specifying second information (132) associated with a second priority (134), the second priority being larger than the first priority;
- assigning the object (122) to the first group (130);
- assigning the second information to the parameter (124);
- employing the second information as monitoring criterion for the parameter if no further information having a priority higher than the second priority is assigned to the parameter.

3. The method of claim 1 or 2, said method further comprising:
- providing a second group (136), the second group specifying third information (138) associated with a third priority (140), the third priority being larger than the first priority;
- assigning the object to the second group;
- assigning the third information to the parameter;
- employing the third information as monitoring criterion for the parameter if no further information having a priority higher than the third priority is assigned to the parameter.

4. The method of claim 1, 2 or 3, said method further comprising:
- providing a third group (142), the third group specifying fourth information (144) associated with a fourth priority (146), the fourth priority being larger than the first priority;
- assigning the first group to the third group;
- assigning the fourth information to the parameter;
- employing the fourth information as monitoring criterion for the parameter if no further information having a priority higher than the fourth priority is assigned to the parameter.

5. A computer program product (116) for specifying a monitoring criterion for a parameter of an object in the operational management system, the computer program product comprising computer executable instructions, the instructions being adapted for perform the method in accordance with any one of the preceding claims.

6. An operational management system comprising:
- means for assigning first information (126) to a parameter (124) of an object (122) of the operational management system, the first information being associated with a first priority (128);
- means for employing the first information as monitoring criterion for the parameter if no further information associated with a priority higher than the first priority is assigned to the parameter.

7. The operational management system of claim 6, further comprising:
- means for providing a first group (130), the first group specifying second information (132) associated with a second priority (134), the second priority being larger than the first priority;
- means for assigning the object (122) to the first group (130);
- means for assigning the second information to the parameter (124);
- means for employing the second information as monitoring criterion for the parameter if no further information having a priority higher than the second priority is assigned to the parameter.

8. The operational management system of claim 6 or 7, further comprising:
- means for providing a second group (136), the second group specifying third information (138) associated with a third priority (140), the third priority being larger than the first priority;
- means for assigning the object to the second group;
- means for assigning the third information to the parameter;
- means for employing the third information as monitoring criterion for the parameter if no further information having a priority higher than the third priority is assigned to the parameter.

9. The operational management system of claim 6, 7 or 8, further comprising:
- means for providing a third group (142), the third group specifying fourth information (144) associated with a fourth priority (146), the fourth priority being larger than the first priority;
- means for assigning the first group to the third group;
- means for assigning the fourth information to the parameter;
- means for employing the fourth information as monitoring criterion for the parameter if no further information having a priority higher than the fourth priority is assigned to the parameter.
